**Europäisches Patentamt**

**European Patent Office**

**Office européen des brevets**

(19)

(11) Veröffentlichungsnummer: **0 007 942**
**B1**

(12) **EUROPÄISCHE PATENTSCHRIFT**

(45) Veröffentlichungstag der Patentschrift: **16.09.81**

(21) Anmeldenummer: **78900112.0**

(22) Anmeldetag: **23.08.78**

(86) Internationale Anmeldenummer:
**PCT/CH78/00014**

(87) Internationale Veröffentlichungsnummer:
**WO 79/00139 22.03.79 Gazette 79/6**

(51) Int. Cl.³: **B 05 B 7/04,** B 05 B 3/04,
F 16 N 7/34, B 22 C 23/02

(54) Sprühdüse, insbesondere zum Besprühen von Druckgiessformen.

(30) Priorität: **09.09.77 CH 11133/77**

(43) Veröffentlichungstag der Anmeldung:
**20.02.80 Patentblatt 80/4**

(45) Bekanntmachung des Hinweises auf die Patenterteilung:
**16.09.81 Patentblatt 81/37**

(84) Benannte Vertragsstaaten:
**DE FR GB SE**

(56) Entgegenhaltungen:
**CH - A - 155 715**
**CH - A - 167 038**
**CH - A - 272 044**
**FR - A - 1 019 443**
**FR - A - 1 244 421**

(73) Patentinhaber: **BAUMGARTNER, Hans, jun.**
**Oberfeldweg 7**
**CH-3250 Lyss (CH)**

(72) Erfinder: **BAUMGARTNER, Hans, jun.**
**Oberfeldweg 7**
**CH-3250 Lyss (CH)**

(74) Vertreter: **Marer, Joseph**
**c/o Peruhag Case postale 2050**
**CH-3001 Berne (CH)**

Sprühdüse, insbesondere zum Besprühen von Druckgiessformen

Die Erfindung betrifft eine Sprühdüse, insbesondere zum Besprühen von Druckgiessformen, wobei der Düsenkörper zum Anschluss an eine steuerbare Luftzufuhr sowie eine steuerbare Trenn- und Schmiermittelzufuhr ausgebildet ist und eine Längsbohrung aufweist, in welcher eine sich drehende Welle vorgesehen ist, wobei zwischen der Welle und der Längsbohrung ein Spielraum vorhanden ist.

Die bekannten Sprühgeräte dieser Art funktionieren meistens nach dem Injektionsprinzip, wobei die mit hoher Geschwindigkeit ausströmende Druckluft die Trenn- und Schmierflüssigkeit ansaugt, mitreisst und zerstäubt. Zur Mengenregulierung der Trenn- und Schmierflüssigkeit dient eine Düsennadel, die durch axiale Verstellung den Durchflussquerschnitt verändern kann. Die Steuerung der Düsennadel kann mechanisch, elektromagnetisch, pneumatisch oder hydraulisch bewirkt werden.

Aus der CH—PS 272'044 ist eine Farbspritzpistole zum Zerstäuben flüssiger Farbstoffe mittels Druckluft bekannt, bei welcher ein Turbinenrädchen zum Zerstäuben der Farbe lose drehbar vor der Mündung der Düse angeordnet ist, welches Rädchen durch den aus dem Mundstück des Pistolengehäuses austretenden Luftstrom in Drehbewegung versetzt wird.

In der FR—PS 1'019'443, die sich auf Flüssigkeitsspritzpistolen bezieht, ist die Düsennadel durch ein geradzahniges Ritzel angetrieben, welches durch einen elektrischen Motor in Drehung versetzt ist. Ferner ist die Düse so geformt, dass sie ein Umrühren der Flüssigkeit verursacht.

Bei anderen Sprühgeräten ohne Düsennadel wird die zu versprühende Flüssigkeitsmenge durch den veränderbaren Flüssigkeitsdruck und durch eine den Durchflussquerschnitt verändernde Stellschraube gesteuert.

Bei allen diesen Sprühgeräten zeigten sich Unregelmässigkeiten und sogar Verstopfungen, welche insbesondere im automatischen Arbeitsablauf höchst unerwünschte Störungen sowie Schädigungen der Druckgiessformen zur Folge haben. Diese Unregelmässigkeiten und Verstopfungen werden erfahrungsgemäss durch die der Sprühflüssigkeit beigemischte Pigment- und Graphitstoffe verursacht.

Mit der Sprühdüse gemäss der Erfindung sollen diese Nachteile behoben werden. Diese Sprühdüse ist dadurch gekennzeichnet, dass der Düsenkörper an seiner Austrittseite einen mit einer zylindrischen Bohrung versehenen Kopf aufweist, dass auf die innere Stirnseite der zylindrischen Bohrung mindestens drei im Umfang verteilte, parallel zur Längsbohrung gerichtete Luftzufuhrkanäle führen, die hinter dem Düsenkopf radial nach aussen offen sind, zum Zwecke, dass die radial von aussen in und durch die Kanäle strömende Luft ein Axialflügelrad in Drehung versetzt, welches Axialflügelrad in der zylindrischen Bohrung untergebracht und mit der Welle drehfest verbunden ist, dass der Spielraum zwischen der Welle und der Längsbohrung als Zuleitung des flüssigen Trenn- und Schmiermittels zum Axialflügelrad dient, und dass an der dem Düsenkopf abgekehrten Stirnseite des Düsenkörpers eine Zufuhröffnung zur Längsbohrung für das Trenn- und Schmiermittel vorgesehen ist, wobei die Welle auf dieser Seite des Düsenkörpers durch einen Bund eines Trenn- und Schmiermittelmischers axial gehalten ist.

In der Zeichnung ist ein Ausführungsbeispiel des Erfindungsgegenstandes dargestellt. Es zeigen:

Fig. 1 die Sprühdüse halb in der Ansicht, halb im Schnitt,

Fig. 2 eine Ansicht von X auf den Kopf des Düsenkörpers,

Fig. 3 eine Ansicht von Y auf das dem Kopf gegenüberliegende Ende des Düsenkörpers,

Fig. 4 eine Sicht auf die Stirnseite des Axialflügelrades,

Fig. 5 eine Sicht auf die Mantelseite des Flügelrades nach Fig. 4,

Fig. 6 eine Ansicht des Trenn- und Schmiermittelmischers, und

Fig. 7 einen Seitenriss desselben.

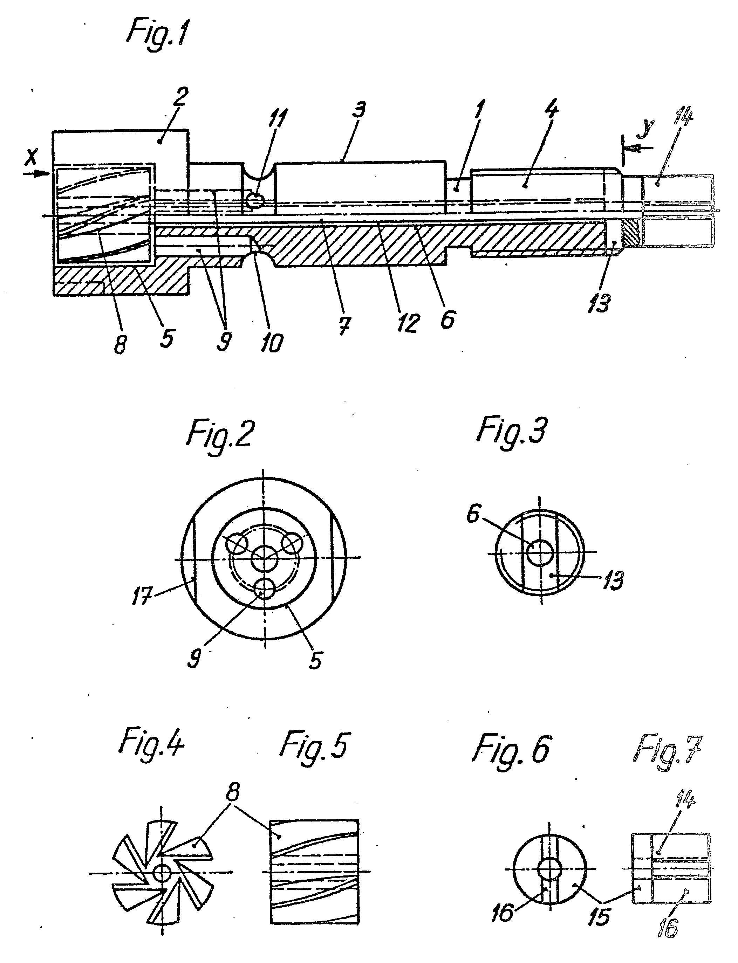

Die dargestellte Sprühdüse ist zum Besprühen von Druckgiessformen vorgesehen und weist einen Düsenkörper 1 auf. Dieser ist mit einem zylindrischen Kopf 2, einem zylindrischen Schaft 3 und einem mit einem Bolzengewinde versehenen Endteil 4 ausgebildet. Der Kopf 2 weist, an der Austrittseite, eine axiale, zylindrische Bohrung 5 auf. Diese ist mit einer durch den Düsenkörper 1 hindurchführenden axialen Längsbohrung 6 verbunden. Eine Welle 7 führt durch die Längsbohrung 6 und ist mit einem in der Bohrung 5 untergebrachten Axialflügelrad 8 drehfest verbunden (Fig. 1, 4, 5). Auf die innere Stirnseite der Bohrung 5 führen drei parallel zur Längsbohrung 6 gerichtete Luftzufuhrkanäle 9. Diese liegen in gleichen Abständen von der Längsachse des Düsenkörpers 1 und sind zueinander um je 120 Grad versetzt (Fig. 1, 2). Der Schaft 3 weist, näher am Kopf 2, eine Eindrehung 10 auf, welche die Eintrittsöffnungen 11 der Luftzufuhrkanäle 9 begrenzt.

Der Durchmesser der Längsbohrung 6 ist wesentlich grösser als der Durchmesser der Welle 7, so dass ein Spielraum 12 gebildet wird, der als Zuleitung für das Trenn- und Schmiermittel dient. Die Stirnseite am Endteil 4 des Düsenkörpers 1 ist mit einem diametralen Schlitz 13 versehen, der als Zufuhröffnung für das Sprühmittel zur Längsbohrung 6 vorgesehen ist (Fig. 1, 3). An der Schlitzseite des Düsenkörpers 1 ist die Welle 7 durch den Bund 15 eines Sprühmittelmischers 14 axial gehalten. Dieser weist an der Anschlagseite des

2

Bundes 15 gegenüberliegenden Seite einen diametralen Mischflügel 16 auf (Fig. 1, 6, 7).

Für die Befestigung ist der Düsenkörper 1 am Endteil 4 mit dem Bolzengewinde ausgebildet. Zum Einschrauben sind zwei Schlüsselansatzflächen 17 am Düsenkopf 2 vorgesehen (Fig. 2).

Die Sprühdüse wird an eine steuerbare Druckluftzufuhr sowie an eine steuerbare Sprühmittelzufuhr angeschlossen. Die Druckluft dringt bei der Eindrehung 10 in die Kanäle 9 und durch das Flügelrad 8 aus dem Düsenkopf 2. Dabei wird das Flügelrad 8 in Drehung versetzt und mit diesem auch die Welle 7 sowie der Sprühmittelmischer 14. Das flüssige Sprühmittel, bestehend aus Trenn- und Schmiermittel, wird unter einen steuerbaren Druck über die Mischflügel 16 und den Bund 15 durch den diametralen Schlitz 13 und durch den Spielraum 12 der Welle 7 zum Flügelrad 8 befördert, wo es durch die Druckluft zerstäubt wird. Die sich drehende Welle 7 bewirkt ein stetiges Durchfliessen des Sprühmittels, so dass die Verstopfungsgefahr völlig behoben ist.

Wird eine sehr feine Zerstäubung gewünscht, so kann durch Verstärkung des Luftdruckes die Drehzahl des Flügelrades 8 erhöht werden.

Es können auch mehr als drei Luftkanäle 9 vorgesehen sein. Durch eine Abdeckung einiger dieser Kanäle 9 oder durch gezielte Verstärkung des Luftdruckes zu gewissen Eintrittsöffnungen 11 der Kanäle 9 kann die Sprührichtung beeinflusst werden.

Versuche ergaben, dass mit einer hohen Drehzahl des Flügelrades 8 eine sehr feine Zerstäubung erreicht wurde. Durch die sich drehende Welle 7 wurden die Unregelmässigkeiten in der Sprühmittelzufuhr gänzlich beseitigt. Verstopfungen waren ausgeschlossen. Ferner konnte die Durchflussmenge des Sprühmittels mit Hilfe der Druckveränderung beliebig variiert werden.

## Patentansprüche

1. Sprühdüse, insbesondere zum Besprühen von Druckgeissformen, wobei der Düsenkörper zum Anschluss an eine steuerbare Luftzufuhr sowie eine steuerbare Trenn- und Schmiermittelzufuhr ausgebildet ist und eine Längsbohrung aufweist, in welcher eine sich drehende Welle vorgesehen ist, wobei zwischen der Welle und der Längsbohrung ein Spielraum vorhanden ist, dadurch gekennzeichnet, dass der Düsenkörper (1) an seiner Austrittsseite einen mit einer zylindrischen Bohrung (5) versehenen Kopf (2) aufweist, dass an die innere Stirnseite der zylindrischen Bohrung (5) mindestens drei im Umfang verteilte, parallel zur Längsbohrung (6) gerichtete Luftzufuhrkanäle (9) führen, die hinter dem Düsenkopf (2) radial nach aussen offen sind, zum Zwecke, dass die radial von aussen in und durch die Kanäle (9) strömende Luft ein Axialflügelrad (8) in Drehung versetzt, welches Axialflügelrad (8) in der zylindrischen Bohrung untergebracht und mit der Welle (7) drehfest verbunden ist, dass der Spielraum (12) zwischen der Welle (7) und der Längsbohrung (6) als Zuleitung des flüssigen Trenn- und Schmiermittels zum Axialflügelrad (8) dient, und dass an der dem Düsenkopf (2) abgekehrten Stirnseite des Düsenkörpers (1) eine Zuführöffnung (13) zur Längsbohrung (6) für das Trenn- und Schmiermittel vorgesehen ist, wobei die Welle (7) auf dieser Seite des Düsenkörpers (1) durch einen Bund (15) eines Trenn-und Schmiermittelmischers (14) axial gehalten ist.

2. Sprühdüse nach Patentanspruch 1, dadurch gekennzeichnet, dass als Trenn- und Schmiermittelmischer (14) ein Rotationskörper vorgesehen ist, welcher an der der Anschlagseite des Bundes (15) abstehenden Seite einen diametralen Mischflügel (16) aufweist.

3. Sprühdüse nach Patentanspruch 2, dadurch gekennzeichnet, dass als Zufuhröffnung (13) für das Trenn- und Schmiermittel ein diametraler Schlitz an der Stirnseite des Düsenkörpers (1) vorgesehen ist.

4. Sprühdüse nach Patentanspruch 1, dadurch gekennzeichnet, dass die Luftzufuhrkanäle (9) an ihrem Eintritt am Düsenkörper (1) durch eine Eindrehung (10) geöffnet sind.

5. Sprühdüse nach Patentanspruch 1, dadurch gekennzeichnet, dass der Düsenkörper (1) am Kopf (2) mit Schlüsselansatzflächen (17) und am gegenüberliegenden Ende mit einem Bolzengewinde ausgebildet ist.

## Claims

1. Spraying nozzle, especially for spraying diecasting moulds, the body of the nozzle being designed for connecting to a controllable air supply as well as a controllable supply of parting compound and lubricant and having a longitudinal drill hole which is equipped with a rotating needle, characterized by the fact that, on its exhaust end, the nozzle body (1) has a head (2) furnished with a cylindrical drill hole (5), that leading to the inside face of the drill hole (5) are at least three air supply channels (9) distributed around the circumference and running parallel to the longitudinal drill hole (6), which channels open outward radially behind the nozzle head (2), so that the air streaming radially from the outside and through the channels (9) makes an axial impeller wheel (8) rotate with a torsion resistant connection to the needle (7), that play (12) is provided between the needle (7) and the longitudinal drill hole (6) which serves as lead-in for the liquid parting compound and lubricant to the axial impeller wheel (8), and that on that end of the nozzle body (1) opposite the nozzle head (2) a supply opening (13) into the longitudinal drill hole (6) is provided for the parting compound and lubricant, the needle (7) being held axially on this end of the nozzle body (1) by the collar (15) of a parting compound and lubricant mixer (14).

2. Spraying nozzle according to claim 1, characterized by the fact that provided as parting compound and lubricant mixer (14) is a rotating body with a diametric mixing impeller (16) on the end opposite the butt-end of the collar (15).

3. Spraying nozzle according to claim 2, characterized by the fact that a diametric groove on the face of the nozzle body (1) is provided as supply opening (13) for the parting compound and lubricant.

4. Spraying nozzle according to claim 1, characterized by the fact that the opening to the air supply channels (9) at their entry to the nozzle body (1) is in the form of a recess (10).

5. Spraying nozzle according to patent claim 1, characterized by the fact that the head (2) of the nozzle body (1) is designed with wrenching surfaces (17) and the opposite end with bolt thread.

**Revendications**

1. Pulvérisateur, notamment pour lubrifier des moules de coulée sous pression, dans lequel le corps du pulvérisateur est agencé de manière à pouvoir être relié, d'une part, à une admission d'air réglable et, d'autre part, à une arrivée réglable d'un lubrifiant et d'un agent séparateur et présente un alésage longitudinal dans lequel tourne avec jeu une aiguille logée dans l'alésage longitudinal, caractérisé par le fait que le corps (1) du pulvérisateur présente, du côté de sa sortie, une tête (2) à alésage cylindrique (5), par le fait que la face frontale interne de l'alésage cylindrique (5) présente au moins trois canaux (9) d'admission d'air parallèles à l'alésage longitudinal (6) et répartis sur sa circonférence, canaux qui sont ouverts radialement vers l'extérieur derrière la tête (2) pour que l'air qui arrive radialement de l'extérieur dans et par les canaux (9) entraîne une roue à aubes axiale (8), cette roue à aubes (8) étant logée dans l'alésage cylindrique et solidaire de l'aiguille (7), par le fait que le jeu (12) entre l'aiguille (7) et l'alésage longitudinal (6) sert de conduit au lubrifiant et à l'agent séparateur vers la roue à aubes (8), et par le fait que le côté opposé à la face frontale de la tête (2) de corps (1) du pulvérisateur présente une ouverture d'admission (13) du lubrifiant et de l'agent séparateur vers l'alésage longitudinal (6), l'aiguille (7) étant retenue axialement, du côté tourné vers le corps (1), par une collerette (15) d'un mélangeur (14) du lubrifiant et de l'agent séparateur.

2. Pulvérisateur selon la revendication 1, caractérisé par le fait que le mélangeur (14) du lubrifiant et de l'agent séparateur est prévu sous forme d'un corps de rotation qui porte, du côté opposé à la collerette (15), une ailette de mélange diamétrale (16).

3. Pulvérisateur selon la revendication 2, caractérisé par le fait que l'ouverture d'admission (13) du lubrifiant et de l'agent séparateur présente une fente diamétrale sur la face frontale du corps (1) du pulvérisateur.

4. Pulvérisateur selon la revendication 1, caractérisé par le fait que les canaux (9) d'admission d'air sont ouverts, du côté de leur entrée dans le corps (1), par une saignée (10).

5. Pulvérisateur selon la revendication 1, caractérisé par le fait que le corps (1) porte, du côté de la tête (2), des faces de prise d'une clé (17) et, du côté opposé, un pas de vis.

Fig.1

Fig.2    Fig.3

Fig.4    Fig.5    Fig.6    Fig.7